Europäisches Patentamt

European Patent Office

Office européen des brevets

(19)

(11) **EP 0 881 250 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int Cl.⁶: **C08G 77/50**, C08G 77/48

(21) Anmeldenummer: **98107480.0**

(22) Anmeldetag: **24.04.1998**

(54) **Verfahren zur Herstellung von Si-gebundene Wasserstoffatome aufweisenden Organosiliciumverbindungen**

Process for preparing organosilicon compounds having hydrogen bound to silicon

Procédé de préparation de composés organosiliciques ayant des atomes d'hydrogène liés au silicium

(84) Benannte Vertragsstaaten:
**DE FR GB IT NL**

(30) Priorität: **30.04.1997 DE 19718470**

(43) Veröffentlichungstag der Anmeldung:
**02.12.1998 Patentblatt 1998/49**

(73) Patentinhaber: **Wacker-Chemie GmbH 81737 München (DE)**

(72) Erfinder: **Herzig Feichten, Christian, Dr. 83329 Waging am See (DE)**

(74) Vertreter: **Deffner-Lehner, Maria, Dr. et al Wacker-Chemie GmbH, Zentralabteilung PLM, Hanns-Seidel-Platz 4 81737 München (DE)**

(56) Entgegenhaltungen:
EP-A- 0 431 173          EP-A- 0 786 463
DE-A- 4 332 425          DE-A- 19 522 144

## Beschreibung

Die Erfindung betrifft ein Verfahren zur Herstellung von Si-gebundene Wasserstoffatome aufweisenden Organosiliciumverbindungen.

Als Vernetzer für aliphatisch ungesättigte Organopolysiloxane werden nahezu ausschließlich Organopolysiloxane mit Hydrogenmethylsiloxaneinheiten verwendet, im einfachsten Fall mit Triorganosiloxygruppen endblockiertes Hydrogenmethylpolysiloxan. Zur Steigerung der Reaktivität hat es sich bewährt zwischen die Hydrogenmethylsiloxaneinheiten durch Equilibrieren Dimethylsiloxaneinheiten einzubauen. Diese Maßnahmen sind jedoch nur sehr begrenzte Verbesserungen.

Gemäß EP-A 694 573 werden multifunktionelle, Si-gebundene Wasserstoffatome aufweisende Siloxancopolymere hergestellt, indem Si-gebundene Wasserstoffatome aufweisende Siloxane mit mehrfunktionellen Olefinen oder olefinischen Siloxanen im Unterschuß umgesetzt werden. Bei dieser Reaktion werden viele Si-gebundene Wasserstoffatome verbraucht. Dies führt zu Produkten mit einer Konzentration von Si-gebundenen Wasserstoffatomen von üblicherweise unter 0,4 Gew.-%, was für die Verwendung als Vernetzer in additionshärtenden Zusammensetzungen nicht wünschenswert ist.

In US-A 5,446,185 und US-A 5,097,054 ist die Herstellung von Si-gebundene Wasserstoffatome aufweisenden Siloxanen nach einem hydrolytischen Verfahren beschrieben, wobei aber nur Produkte mit maximal drei Si-gebundenen Wasserstoffatomen je Molekül entstehen. Solche Produkte sind als Vernetzer ungeeignet.

Aus Chemical Abstracts vol. 123, 56277w (1995) ist ein Verfahren zur Herstellung von Carbosiloxanen bekannt, die je Molekül bis zu sechs Si-gebundene Wasserstoffatome aufweisen können. Durch Addition von Hydrogenchlorsilanen an ungesättigte Silane werden Vorprodukte mit SiCl-Gruppen erhalten, die in einem hydrolytischen Verfahren mit Tetramethyldisiloxan umgesetzt werden.

Es bestand die Aufgabe, ein Verfahren zur Herstellung von Si-gebundene Wasserstoffatome aufweisenden Organosiliciumverbindungen bereitzustellen, wobei multifunktionelle Organosiliciumverbindungen mit SiH-Gruppen in endständigen M-Siloxaneinheiten erhalten werden und diese mit Organosiliciumverbindungen, die Reste mit aliphatischen Kohlenstoff-Kohlenstoff-Mehrfachbindungen aufweisen, in Gegenwart von die Anlagerung von Si-gebundenem Wasserstoff an aliphatische Mehrfachbindung fördernden Katalysatoren rasch vernetzen. Die Aufgabe wird durch die Erfindung gelöst.

Gegenstand der Erfindung ist ein Verfahren zur Herstellung von Si-gebundene Wasserstoffatome aufweisenden Organosiliciumverbindungen indem in einem ersten Schritt

Silane (1) der allgemeinen Formel

$$R^1R_aSiX_{3-a}$$

wobei

R gleich oder verschiedenen sein kann und einen einwertigen, von aliphatischen Mehrfachbindungen freien, gegebenenfalls halogenierten Kohlenwasserstoffrest mit 1 bis 8 Kohlenstoffatomen je Rest bedeutet,
$R^1$ einen einwertigen endständig ungesättigten Kohlenwasserstoffrest mit 2 bis 14 Kohlenstoffatomen je Rest bedeutet und
X gleich oder verschieden sein kann, ein Halogenatom oder ein Rest der Formel $-OR^2$ ist, wobei $R^2$ einen Alkylrest mit 1 bis 8 Kohlenstoffatomen je Rest, der durch ein Ethersauerstoffatom substituiert sein kann, bedeutet,
a 0 oder 1 ist,

mit Organosiliciumverbindungen (2) mit mindestens zwei Si-gebundenen Wasserstoffatomen je Molekül in Gegenwart von die Anlagerung von Si-gebundenem Wasserstoff an aliphatische Mehrfachbindung fördernden Katalysatoren (3) umgesetzt werden und überschüssige Silane (1) destillativ entfernt werden,
wobei das eingesetzte Verhältnis von aliphatischer Doppelbindung in Silan (1) zu Si-gebundenem Wasserstoff in Organosiliciumverbindung (2) 1,0 bis 2,0 beträgt,
in einem zweiten Schritt
die so erhaltenen hydrolysefähige Gruppen aufweisenden Verbindungen
mit Silanen (4) der allgemeinen Formel

$$H_bR_{3-b}SiZ$$

oder Siloxanen (5) der allgemeinen Formel

$$H_bR_{3-b}SiOSiR_{3-b}H_b$$

wobei

R die oben dafür angegebene Bedeutung hat,
Z ein Halogenatom oder ein Rest der Formel $-OR^3$, wobei $R^3$ einen einwertigen Kohlenwasserstoffrest mit 1 bis 8 Kohlenstoffatomen je Rest, der durch ein Ethersauerstoffatom substituiert sein kann, bedeutet,
b 1 oder 2 ist,

und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen X in den aus dem ersten Schritt erhaltenen Verbindungen 0,8 bis 5,0 beträgt,

und gegebenenfalls in einem dritten Schritt

die so erhaltenen Si-gebundene Wasserstoffatome aufweisenden Organosiliciumverbindungen mit gegebenenfalls Si-gebundene Wasserstoffatome aufweisenden Organopolysiloxanen (7) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Mono- organo- siloxaneinheiten, equilibriert werden,

mit der Maßgabe, daß die so erhaltenen Si-gebundene Wasserstoffatome aufweisenden Organosiliciumverbindungen durchschnittlich je Molekül mindestens 4 Si-gebundene Wasserstoffatome aufweisen.

Die erfindungsgemäßen, Si-gebundene Wasserstoffatome aufweisenden Organosiliciumverbindungen besitzen vorzugsweise eine Viskosität von 10 bis 100 mm$^2$·s$^{-1}$ bei 25°C, bevorzugt 20 bis 70 mm$^2$·s$^{-1}$ bei 25°C.

Die erfindungsgemäßen, Si-gebundene Wasserstoffatome aufweisenden Organosiliciumverbindungen enthalten durchschnittlich je Molekül vorzugsweise 6 bis 50 Si-gebundene Wasserstoffatome, bevorzugt 8 bis 50 Si-gebundene Wasserstoffatome, besonders bevorzugt 10 bis 40 Si-gebundene Wasserstoffatome.

Die erfindungsgemäßen, Si-gebundene Wasserstoffatome aufweisenden Organosiliciumverbindungen besitzen ein Hydrogenequivalentgewicht von vorzugsweise 60 bis 200 g pro Mol Si-gebundenen Wasserstoff, bevorzugt 90 bis 150 g pro Mol Si-gebundenen Wasserstoff.

Der Rest R in den Si-gebundenen Wasserstoffatomen aufweisenden Organosiliciumverbindungen ist frei von aliphatischen Mehrfachbindungen, damit es zu keiner Eigenvernetzung kommt, die zu Unlöslichkeiten führt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Reste R$^1$ sind Alkenylreste, wie der Vinyl-, Allyl-, 5-Hexenyl-, 7-Octenylrest, 2-(4-Vinylphenyl)ethyl-, 1-(4-Vinylphenyl)ethyl-, 1-(3-Vinylphenyl)ethyl-, 2-(3-Isopropenylphenyl)-2-methylethyl- und 2-(4-Isopropenylphenyl)-2-methylethylrest. Bevorzugt ist der Vinylrest.

Beispiele für Alkylreste R$^2$ sind der Methyl-, Ethyl-, n- Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste R$^2$, die durch ein Ethersauerstoffatom substituiert sind, sind der Methoxyethyl- und Ethoxyethylrest.

Beispiele für Kohlenwasserstoffreste R$^3$ sind Alkylreste, wie der Methyl-, Ethyl-, n- Propyl-, iso-Propyl-, 1-n-Butyl-, 2-n-Butyl-, iso-Butyl-, und tert.-Butylrest, wobei der Methyl- und Ethylrest bevorzugt ist, und der Rest der Formel -C(=CH$_2$)CH$_3$. Beispiele für Alkylreste R$^3$, die durch ein Ethersauerstoffatom substituiert sind, sind der Methoxyethyl- und Ethoxyethylrest.

Ein bevorzugtes Beispiel für das Halogenatom X ist das Chloratom.

Beispiele für Reste Z sind -Cl, -Br, -OCH$_3$, -OC$_2$H$_5$ und -OC(=CH$_2$)CH$_3$.

a ist bevorzugt 0.
b ist bevorzugt 1.

Die nach dem erfindungsgemäßen Verfahren erhaltenen Si-gebundene Wasserstoffatome aufweisenden Organosiliciumverbindungen enthalten vorzugsweise als endständige Einheiten SiH-Gruppen aufweisende M-Siloxaneinheiten der Formel

$$H_aR_{3-a}SiO_{1/2}   \qquad (I)$$

wobei

R und a die oben dafür angegebene Bedeutung haben.

Ein besonders bevorzugtes Beispiel für die endständige, SiH-Gruppen enthaltende M-Siloxaneinheit in den erfindungsgemäßen multifunktionellen Organosiliciumverbindungen ist die Hydrogendimethylsiloxaneinheit.

Beispiele für Silane (1) sind Vinylmethyldichlorsilan, Vinyltrichlorsilan, 5-Hexenylethyldibromsilan, 5-Hexenyltrichlorsilan und 7-Octenyltrichlorsilan.

Als Organosiliciumverbindungen (2) können solche ausgewählt aus der Gruppe der Organo(poly)siloxane, Carbosilane, Carbosiloxane, Polysilane und Polysilanosiloxane eingesetzt werden. Die Organosiliciumverbindungen (2) können daher Struktureinheiten der Formel Si-O-Si, Si-R$^4$-Si, Si-R$^4$-Si-O-Si, Si-Si oder Si-SiO-Si aufweisen, wobei R$^4$ einen zweiwertigen Koh-

lenwasserstoffrest mit 2 bis 12 Kohlenstoffatomen je Rest, der durch ein oder mehrere separate Sauerstoffatome unterbrochen sein kann, bedeutet. Die Organosiliciumverbindungen (2) können linear, verzweigt oder cyclisch sein und weisen vorzugsweise 2 bis 20 Si-gebundene Wasserstoffatome je Molekül auf.

Die Organosiliciumverbindungen (2) enthalten Einheiten mit Si-gebundenen Wasserstoffatomen. Beispiele für Siloxaneinheiten mit Si-gebundenen Wasserstoffatomen sind solche der Formel

$$HR_2SiO_{1/2}, \; H_2RSiO_{1/2} \text{ und } HRSiO,$$

wobei

R die oben dafür angegebene Bedeutung hat. Weitere Beispiele für Einheiten mit Si-gebundenen Wasserstoffatomen sind solche der Formel

$$HR_2Si\text{-}R^4\text{-}, \; \text{-}R^4\text{-}HRSi\text{-}R^4\text{-}, \; \text{-}HRSi\text{- und } HR_2Si\text{-},$$

wobei

R und $R^4$ die oben dafür angegebene Bedeutung haben.

Beispiele für Reste $R^4$ sind der 1,2-Ethylen-, 1,4-Butylen-, 1,6-Hexylen-, 1,1-Ethylen- und der 4-Oxa-1,7-heptylenrest.

Bevorzugte Beispiele für Organosiliciumverbindungen (2) sind Siloxane der allgemeinen Formel

$$R_3SiO(HRSiO)_nSiR_3,$$

$$HR_2SiO(HRSiO)_nSiR_2H$$

und

$$H_2RSiO(HRSiO)_nSiRH_2$$

wobei

R die oben dafür angegebene Bedeutung hat und n eine ganze Zahl von 1 bis 10, insbesondere 1 bis 7 bedeutet.

Bevorzugt werden als Organosiliciumverbindungen (2) destillierbare Siloxane mit einem Molekulargewicht $M_n$ von höchstens 600 eingesetzt, da diese Siloxane nach dem ersten Verfahrensschritt destillativ entfernt werden können. Die Organosiliciumverbindungen (2) weisen bevorzugt 1 bis 2 Gewichtsprozent Si-gebundenen Wasserstoff auf.

Bei dem erfindungsgemäßen Verfahren kann im ersten Verfahrensschritt eine Art von Silan (1) oder verschiedene Arten von Silan (1) eingesetzt werden.

Bei dem erfindungsgemäßen Verfahren kann im ersten Verfahrensschritt eine Art von Organosiliciumverbindung (2) oder verschiedene Arten von Organosiliciumverbindung (2) eingesetzt werden.

Bei dem erfindungsgemäßen Verfahren beträgt im ersten Verfahrenschritt das eingesetzte Verhältnis von aliphatischer Doppelbindung in Silan (1) zu Si-gebundenem Wasserstoff in Organosiliciumverbindung (2) vorzugsweise 1,0 bis 1,5, bevorzugt 1,0 bis 1,2.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetra-methyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird im ersten Verfahrensschritt vorzugsweise in Mengen von 1 bis 50 Gew.-ppm (Gewichtsteilen je Million Gewichtsteilen), bevorzugt in Mengen von 5 bis 20 Gew.-ppm, jeweils berechnet als elementares Platin und bezogen auf das Gesamtgewicht von Silan (1) und Organosiliciumverbindung (2) verwendet.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 40°C bis 140°C, bevorzugt 60°C bis 120°C, durchgeführt.

In dem ersten Verfahrensschritt können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden nach dem ersten Verfahrensschritt destillativ entfernt.

Bevorzugte Ausführung im ersten Verfahrensschritt ist die Zudosierung von Organosiliciumverbindung (2) zu einem Gemisch aus Silan (1) und Katalysator (3).

Die nach dem ersten Verfahrensschritt erhaltenen Reaktionsprodukte aus (1) und (2) enthalten vorzugsweise mindestens 6, bevorzugt 6 bis 30 hydrolysefähige Gruppen X.

Beispiele für Silane (4), die bei dem erfindungsgemäßen Verfahren im zweiten Verfahrensschritt eingesetzt werden sind Dimethylchlorsilan, Methylchlorsilan, Chlorsilan, Methylbromsilan, Dimethylmethoxysilan, Methylmethoxysilan, Dimethylethoxysilan, Diethylchlorsilan, Dimethylisopropenoxysilan, Methyldiisopropenoxysilan.

Beispiele für Siloxane (5), die bei dem erfindungsgemäßen Verfahren im zweiten Verfahrensschritt eingesetzt werden sind 1,1,3,3-Tetramethyldisiloxan, 1,3-Dimethyldisiloxan, 1,1,1,3,3-Pentamethyldisiloxan, 1,1-Dimethyldisiloxan.

Bei dem erfindungsgemäßen Verfahren kann im zweiten Verfahrensschritt eine Art von Silan (4) oder verschiedene Arten von Silan (4) sowie eine Art von Siloxan (5) oder verschiedene Arten von Siloxan (5) eingesetzt werden.

Die bei dem erfindungsgemäßen Verfahren im zweiten Verfahrensschritt eingesetzten die Hydrolyse fördernde Katalysatoren (6) können dieselben sein mit denen auch bisher die Hydrolyse von hydrolysefähige Gruppen aufweisenden Organosiliciumverbindungen gefördert werden konnte. Als Katalysatoren (6) können Säuren oder Basen eingesetzt werden, wobei die Säuren bevorzugt sind. Beispiele für Säuren sind Salzsäure, Bromwasserstoffsäure, Schwefelsäure, Perchlorsäure, wobei Salzsäure bevorzugt ist. Besonders bevorzugt ist Salzsäure in einer Konzentration von 1 bis 20 %.

Wasser wird im zweiten Verfahrensschritt vorzugsweise in Mengen von 20 bis 200 g, bezogen auf Mol Si-gebundener hydrolysefähiger Gruppe X eingesetzt.

Bei dem erfindungsgemäßen Verfahren beträgt im zweiten Verfahrensschritt das Verhältnis von Si-Atomen in Silanen (4) oder Siloxanen (5) zu hydrolysefähigen Gruppen in den aus dem ersten Verfahrensschritt erhaltenen hydrolysefähige Gruppen aufweisenden Verbindungen vorzugsweise 1,0 bis 4,0, bevorzugt 1,5 bis 3,5.

Bevorzugte Vorgehensweisen im zweiten Verfahrensschritt sind entweder ein Vormischen von aus dem ersten Verfahrensschritt erhaltenen Verbindungen mit Silanen (4) und die gemeinsame Cohydrolyse durch Zudosieren dieses Gemisches zu vorgelegter Säure oder die Vermischung von Siloxanen (5) mit Säure und Zudosieren der aus dem ersten Verfahrensschritt erhaltenen Verbindungen.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 0°C bis 40°C, bevorzugt 10°C bis 25°C durchgeführt.

Die Aufarbeitung des zweiten Verfahrensschrittes erfolgt vorzugsweise durch Abtrennen der wäßrigen Phase und Waschen mit Wasser und Pufferlösung.

Überschüssiges Silan (4) und Siloxan (5) werden nach dem zweiten Verfahrensschritt vorzugsweise abgetrennt, bevorzugt destillativ entfernt.

In dem zweiten Verfahrensschritt können inerte, organische Lösungsmittel mitverwendet werden. Beispiele für inerte, organische Lösungsmittel sind Cyclohexan, Toluol, Xylole, niedere Ketone, wie Aceton oder Butanon.

Die gegebenenfalls mitverwendeten inerten organischen Lösungsmittel werden nach dem zweiten Verfahrensschritt abgetrennt, vorzugsweise destillativ entfernt.

Die nach dem zweiten Verfahrensschritt erhaltenen Si-gebundene Wasserstoffatome aufweisenden Organosiliciumverbindungen können in einem dritten Verfahrensschritt mit gegebenenfalls Si-gebundene Wasserstoffatome aufweisenden Organosiloxanen (7) equilibriert werden. Wird die Equilibrierung durchgeführt, enthalten die erfindungsgemäßen Si-gebundene Wasserstoffatome aufweisenden Organosiliciumverbindungen vorzugsweise höchstens zehn Einheiten der Formel

$$H_c R_d Si O_{\frac{4-c-d}{2}} \qquad (IV)$$

wobei

R die oben dafür angegebene Bedeutung hat,
c 0 oder 1, d 1 oder 2 und die Summe c+d 1 oder 2 ist,

bevorzugt höchstens fünf Einheiten der Formel (IV).

Als gegebenenfalls Si-gebundene Wasserstoffatome aufweisende Organopolysiloxane (7) werden vorzugsweise solche ausgewählt aus der Gruppe bestehend aus linearen, endständige Triorganosiloxygruppen aufweisenden Organopolysiloxanen der Formel

$$R_3'SiO(SiR_2'O)_rSiR_3',$$

wobei

R' die gleiche Bedeutung wie R hat oder ein Wasserstoffatom bedeutet,
r 0 oder eine ganze Zahl im Wert von 1 bis 500, bevorzugt 10 bis 200, ist,

linearen, endständige Hydroxylgruppen aufweisenden Organopolysiloxanen der Formel

$$HO(SiR_2'O)_sH \,,$$

wobei

R' die oben dafür angegebene Bedeutung hat und s eine ganze Zahl im Wert von 1 bis 1000, bevorzugt 10 bis 500, ist,

verzweigten, gegebenenfalls Hydroxylgruppen aufweisenden Organopolysiloxanen aus Einheiten der Formel

$$R_3'SiO_{1/2}, R_2'SiO \text{ und } R'SiO_{3/2},$$

wobei

R' die oben dafür angegebene Bedeutung hat, cyclischen Organopolysiloxanen der Formel

$$(R_2'SiO)_t,$$

wobei

R' die oben dafür angegebene Bedeutung hat und
t eine ganze Zahl von 3 bis 12 ist,

und Mischpolymerisaten aus Einheiten der Formel

$$R_2'SiO \text{ und } R'SiO_{3/2} \,,$$

wobei

R' die oben dafür angegebene Bedeutung hat, eingesetzt.

Bevorzugte Organopolysiloxane (7) sind die der Formeln

$$R_3'SiO(SiR_2'O)_rSiR_3' \text{ und } HO(SiR_2'O)_sH.$$

Das Mengenverhältnis der bei der gegebenenfalls durchgeführten Equilibrierung eingesetzten Organopolysiloxane (7) und Si-gebundene Wasserstoffatome aufweisenden Organosiliciumverbindungen wird lediglich durch den gewünschten Anteil der Si-gebundenen Wasserstoffatome in den bei der gegebenenfalls durchgeführten Equilibrierung erzeugten Organosiliciumverbindungen und durch die gewünschte mittlere Kettenlänge bestimmt.

Bei dem gegebenenfalls durchgeführten Equilibrieren werden saure Katalysatoren, welche die Equilibrierung fördern, eingesetzt.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen und eingesetzten Organopolysiloxane (7), verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Organosiliciumverbindungen und eingesetzten Organopolysiloxane (7), mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die nach dem erfindungsgemäßen Verfahren erhaltenen Si-gebundene Wasserstoffatome aufweisenden Organosiliciumverbindungen werden vorzugsweise verwendet in vernetzbaren Zusammensetzungen enthaltend

(A) Organosiliciumverbindungen, die Reste mit aliphatischen Kohlenstoff-Kohlenstoff-Mehrfachbindungen aufweisen,
(B) nach dem erfindungsgemäßen Verfahren hergestellte Si-gebundene Wasserstoffatome aufweisende Organosiliciumverbindungen,
(C) die Anlagerung von Si-gebundenen Wasserstoff an aliphatische Mehrfachbindung fördernde Katalysatoren

und gegebenenfalls

(D) die Anlagerung von Si-gebundenem Wasserstoff an aliphatische Mehrfachbindung bei Raumtemperatur verzögernde Mittel.

Die die erfindungsgemäßen, Si-gebundene Wasserstoffatome aufweisenden Organosiliciumverbindungen (B) enthaltenden vernetzbaren Zusammensetzungen werden vorzugsweise zur Herstellung von klebrige Stoffe abweisenden Überzügen, z.B. zur Herstellung von Trennpapieren, verwendet.

Als Organosiliciumverbindungen (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel

$$R_e^5 R_f^6 Si\ O_{\frac{4-e-f}{2}} \qquad (V)$$

wobei

$R^5$ einen einwertigen von aliphatischen KohlenstoffKohlenstoff-Mehrfachbindungen freien Kohlenwasserstoffrest mit 1 bis 18 Kohlenstoffatomen je Rest und
$R^6$ einen einwertigen Kohlenwasserstoffrest mit mindestens einer terminalen aliphatischen Kohlenstoff-Kohlenstoff-Mehrfachbindung mit 2 bis 12 Kohlenstoffatomen je Rest bedeutet,
e 0, 1, 2 oder 3,
f 0, 1 oder 2

und die Summe e+f 0, 1, 2 oder 3 ist,
mit der Maßgabe, daß durchschnittlich mindestens 1 Rest $R^6$ je Molekül, bevorzugt mindestens 2 Reste $R^6$ je Molekül vorliegen, verwendet.

Beispiele für Reste $R^5$ entsprechen den Beispielen für Reste R.

Beispiele für Reste $R^6$ sind Alkenylreste, wie der Vinyl-, 5-Hexenyl-, 2,4-Divinylcyclohexylethyl-, 3,4-Divinylcyclo-hexylethyl-, 2-Propenyl-, 3-Butenyl- und 4-Pentenylrest; und Alkinylreste, wie der Ethinyl- und 2-Propinylrest.

Organosiliciumverbindungen (A) und Beispiele hierfür sind beispielsweise in der DE-OS 195 41 51 und in der US-A 5,241,034 beschrieben.

Bestandteil (B) wird vorzugsweise in Mengen von 0,8 bis 5,0, bevorzugt 0,8 bis 2,5, besonders bevorzugt 1,0 bis 2,0 Grammatom Si-gebundenen Wasserstoff je Mol Si-gebundenen Restes mit aliphatischer Kohlenstoff-Kohlenstoff Mehrfachbindung im Bestandteil (A) eingesetzt.

Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichtsppm, jeweils berechnet als elementares Platinmetall und bezogen auf das Gesamtgewicht der Organosiliciumverbindungen (A) und (B) eingesetzt.

Beispiele für weitere Bestandteile, die bei den erfindungsgemäßen Zusammensetzungen mitverwendet werden können, sind die Anlagerung von Si-gebundenem Wasserstoff an aliphatische Mehrfachbindung bei Raumtemperatur verzögernde Mittel, sogenannte Inhibitoren (D), Mittel zur Einstellung der Trennkraft, Lösungsmittel, Haftvermittler und Pigmente.

Beispiele für Inhibitoren (D) sind in der DE-OS 195 22 144 beschrieben.

Vorzugsweise wird der Inhibitor (D) in Mengen von 0,01 bis 10 Gew.-%, bezogen auf das Gesamtgewicht der Organosiliciumverbindungen (A) und (B), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C, bevorzugt 70°C bis 120°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln - z. B. Kuchen, Honig, Bonbons und Fleisch; Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beispiel 1

a) 332 g eines destillierten Equilibrats der durchschnittlichen Zusammensetzung $(HMe_2SiO_{1/2})_2$ $(HMeSiO)_{3,3}$ (Me = Methylrest) mit ca. 1,6 Gew.-% Si-gebundenem Wasserstoff wird zudosiert zu 900 g Vinyltrichlorsilan, welches ca. 10 mg Platin in Form eines Platin-1,3-Divinyl-1,1,3,3-tetramethyldisiloxan-Komplexes, des sogenannten Karstedt-Katalysators, der im folgenden dem Katalysator entspricht, wie er nach US-A 3,775,452 (ausgegeben am 27.11.1973, Bruce D. Karstedt, General Electric Company) hergestellt wird, enthält. Während des Zudosierens läßt man die Sumpftemperatur stetig auf rund 120°C steigen und läßt eine weitere Stunde nachreagieren. Anschließend wird der Silanüberschuß im Vakuum ausdestilliert. Es werden 1176 g eines Siloxans mit Trichlorsilylendgruppen und einem Chlor-Equivalentgewicht von ca. 75 g / Mol Si-gebundenem Chlor bzw. einem Chlorgehalt von 47,3 % erhalten. Das Siloxan enthält keinen Si-gebundenen Wasserstoff.

b) 150 g 1,1,3,3-Tetramethyldisiloxan werden mit 20 ml Wasser intensiv gerührt. Es werden 56,3 g des Chlorsiloxans, dessen Herstellung oben unter a) beschrieben ist, und ca. 100 ml Wasser über einen Zeitraum von einer Stunde zudosiert, wobei die Mischung durch Kühlen auf eine Temperatur von 20 - 25°C gehalten wird. Man rührt bei Raumtemperatur noch zwei Stunden nach, trennt die wässrige Phase ab, wäscht zweimal mit je 200 ml Wasser und mit Phosphatpuffer neutral. Das so erhaltende Hydrogencarbosiloxan wird bei 110°C im Vakuum von flüchtigen Nebenbestandteilen befreit. Es werden 78 g eines klaren Öls mit einer Viskosität von 47 mm²/s bei 25 °C, welches Hydrogendimethylsiloxygruppen aufweist, erhalten. Das Hydrogencarbosiloxan enthält 8,7 g Si-gebundenen Wasserstoff pro kg.

Beispiel 2

105 g 1,1,3,3-Tetramethyldisiloxan werden mit 20 ml Wasser intensiv gerührt. 56,3 g des Chlorsiloxans, dessen Herstellung in Beispiel 1 unter a) beschrieben ist, und 100 ml Wasser werden gleichzeitig aus separaten Behältern in ca. 30 Minuten zudosiert, wobei die Temperatur durch Kühlen auf ca. 25°C gehalten wird. Nach zwei Stunden Nachrühren werden die Phasen getrennt. Die Siloxanphase wird zweimal mit je 200 ml Wasser und danach mit Phosphatpuffer neutral gewaschen. Flüchtige Bestandteile werden bei 110°C im Vakuum entfernt. Es werden 70 g eines klaren Öls mit einer Viskosität von 55 mm²/s bei 25°C erhalten. Das Hydrogendimethylsiloxygruppen aufweisende Siloxan enthält pro kg 8,6 g Si-gebundenen Wasserstoff.

Beispiel 3

a) Die in Beispiel 1 unter a) beschriebene Arbeitsweise wird wiederholt mit der Abänderung, daß statt des dort eingesetzten H-Siloxanequilibrats 586 g eines Siloxans der durchschnittlichen Zusammensetzung $(Me_3SiO_{1/2})_2(HMeSiO)_{3,3}$ (Me = Methylrest) mit 0,9 Gew.-% Si-gebundenem Wasserstoff verwendet wird. Nach analoger Durchführung und Aufarbeitung werden 1413 g eines Siloxans mit Trichlorsilylendgruppen, in dem kein Si-gebundener Wasserstoff mehr nachweisbar ist, erhalten. Das Chlorsiloxan enthält 39,0 Gew.-% Si-gebundenes Chlor und besitzt daher ein Chlor-Equivalentgewicht von 91 g / Mol Si-gebundenen Chlors.

b) 68 g des Chlorsiloxans, dessen Herstellung oben unter a) beschrieben ist, wird, wie in Beispiel 1 unter b) beschrieben, mit den gleichen Mengen an Disiloxan und Wasser umgesetzt und identisch aufgearbeitet. Es werden 90 g eines klaren Öls mit einer Viskosität von 41 mm²/s bei 25°C, das Hydrogendimethylsiloxygruppen aufweist, erhalten. Das Öl enthält 7,6 g Si-gebundenen Wasserstoff pro kg.

**Patentansprüche**

1. Verfahren zur Herstellung von Si-gebundene Wasserstoffatome aufweisenden Organosiliciumverbindungen, dadurch gekennzeichnet, daß
in einem ersten Schritt
Silane (1) der allgemeinen Formel

$$R^1R_aSiX_{3-a}$$

wobei

R gleich oder verschiedenen sein kann und einen einwertigen, von aliphatischen Mehrfachbindungen freien, gegebenenfalls halogenierten Kohlenwasserstoffrest mit 1 bis 8 Kohlenstoffatomen je Rest bedeutet,
$R^1$ einen einwertigen endständig ungesättigten Kohlenwasserstoffrest mit 2 bis 14 Kohlenstoffatomen je Rest bedeutet und
X gleich oder verschieden sein kann, ein Halogenatom oder ein Rest der Formel -OR² ist, wobei R² einen Alkylrest mit 1 bis 8 Kohlenstoffatomen je Rest, der durch ein Ethersauerstoffatom substituiert sein kann, bedeutet,
a 0 oder 1 ist,

mit Organosiliciumverbindungen (2) mit mindestens zwei Si-gebundenen Wasserstoffatomen je Molekül
in Gegenwart von die Anlagerung von Si-gebundenem Wasserstoff an aliphatische Mehrfachbindung fördernden Katalysatoren (3) umgesetzt werden und überschüssige Silane (1) destillativ entfernt werden, wobei das eingesetzte Verhältnis von aliphatischer Doppelbindung in Silan (1) zu Si-gebundenem Wasserstoff in Organosiliciumverbindung (2) 1,0 bis 2,0 beträgt,
in einem zweiten Schritt
die so erhaltenen hydrolysefähige Gruppen aufweisenden Verbindungen
mit Silanen (4) der allgemeinen Formel

$$H_bR_{3-b}SiZ$$

oder Siloxanen (5) der allgemeinen Formel

$$H_bR_{3-b}SiOSiR_{3-b}H_b$$

wobei

R die oben dafür angegebene Bedeutung hat,
Z ein Halogenatom oder ein Rest der Formel -OR³,
wobei R³ einen einwertigen Kohlenwasserstoffrest mit 1 bis 8 Kohlenstoffatomen je Rest, der durch ein Ethersauerstoffatom substituiert sein kann, bedeutet,
b 1 oder 2 ist,

und Wasser in Gegenwart von die Hydrolyse fördernde Katalysatoren (6) umgesetzt werden,
wobei das eingesetzte Verhältnis von Si-Atomen in Silanen (4) oder Siloxanen (5) zu hydrolysefähigen Gruppen X in den aus dem ersten Schritt erhaltenen Verbindungen 0,8 bis 5,0 beträgt,
und gegebenenfalls in einem dritten Schritt
die so erhaltenen Si-gebundene Wasserstoffatome aufweisenden Organosiliciumverbindungen mit gegebenenfalls Si-gebundene Wasserstoffatome aufweisenden Organopolysiloxanen (7) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
mit der Maßgabe, daß die so erhaltenen Si-gebundene Wasserstoffatome aufweisenden Organosiliciumverbindungen durchschnittlich je Molekül mindestens 4 Si-gebundene Wasserstoffatome aufweisen.

2. Verfahren nach Anspruch 1, dadurch gekennzeichnet, daß als Silan (1) Vinyltrichlorsilan verwendet wird.

3. Verfahren nach Anspruch 1 oder 2, dadurch gekennzeichnet, daß als Organosiliciumverbindung (2) Siloxane der allgemeinen Formel

$$HR_2SiO(HRSiO)_nSiR_2H$$

wobei

R die in Anspruch 1 dafür angegebene Bedeutung hat und n eine ganze Zahl im Wert von 1 bis 10 bedeutet, verwendet werden.

4. Verfahren nach Anspruch 1, 2 oder 3, dadurch gekennzeichnet, daß als Siloxan (5) 1,1,3,3-Tetramethyldisiloxan verwendet wird.

**Claims**

1. Process for preparing organosilicon compounds having Si-bonded hydrogen atoms, characterized in that
in a first step
silanes (1) of the general formula

$$R^1R_aSiX_{3-a}$$

where

R may be identical or different and is a monovalent hydrocarbon radical having from 1 to 8 carbon atoms per radical, halogenated if desired and free from aliphatic multiple bonds,
$R^1$ is a monovalent terminal unsaturated hydrocarbon radical having from 2 to 14 carbon atoms per radical and
X may be identical or different and is a halogen atom or a radical of the formula -$OR^2$, where $R^2$ is an alkyl radical having from 1 to 8 carbon atoms per radical, which may be substituted with an ethereal oxygen atom,
a is 0 or 1,

are reacted with organosilicon compounds (2) having at least two Si-bonded hydrogen atoms per molecule
in the presence of catalysts (3) which promote the addition of Si-bonded hydrogen to an aliphatic multiple bond

and excess silanes (1) are removed by distillation, where the ratio employed of aliphatic double bond in silane (1) to Si-bonded hydrogen in organosilicon compound (2) is from 1.0 to 2.0,
in a second step
the resultant compounds having hydrolysable groups are reacted with silanes (4) of the general formula

$$H_bR_{3-b}SiZ$$

or siloxanes (5) of the general formula

$$H_bR_{3-b}SiOSiR_{3-b}H_b$$

where

R is as stated above,
Z is a halogen atom or a radical of the formula -$OR^3$, where $R^3$ is a monovalent hydrocarbon radical having from 1 to 8 carbon atoms per radical, which may be substituted with an ethereal oxygen atom,
b is 1 or 2,

and water, in the presence of catalysts (6) which promote hydrolysis,
where the ratio employed of Si atoms in silanes (4) or in siloxanes (5) to hydrolysable groups X in the compounds obtained from the first step is from 0.8 to 5.0,
and, if desired, in a third step
the resultant organosilicon compounds having Si-bonded hydrogen atoms are equilibrated with organopolysiloxanes (7) having, if desired, Si-bonded hydrogen atoms and selected from the class consisting of linear organopolysiloxanes having terminal triorganosiloxy groups, linear organopolysiloxanes having terminal hydroxyl groups, branched organopolysiloxanes having, if desired, hydroxyl groups, cyclic organopolysiloxanes and copolymers made from diorganosiloxane units and monoorganosiloxane units,
with the proviso that the resultant organosilicon compounds having Si-bonded hydrogen atoms have on average at least 4 Si-bonded hydrogen atoms per molecule.

2. Process according to Claim 1, characterized in that vinyl trichlorosilane is used as silane (1).

3. Process according to Claim 1 or 2, characterized in that siloxanes of the general formula

$$HR_2SiO(HRSiO)_nSiR_2H$$

are used as the organosilicon compound (2), where

R is as stated in Claim 1 and n is an integer from 1 to 10.

4. Process according to Claim 1, 2 or 3, characterized in that 1,1,3,3-tetramethyldisiloxane is used as siloxane (5).

## Revendications

1. Procédé de préparation de composés organosiliciés renfermant des atomes d'hydrogène liés à Si caractérisé en ce que
dans une première étape, on fait réagir
des silanes (1) de formule générale

$$R^1R_aSiX_{3-a}$$

dans laquelle

R peut être identique ou différent et représente un radical hydrocarboné monovalent, exempt de liaisons multiples aliphatiques et éventuellement halogéné, ayant de 1 à 8 atomes de carbone par radical,
$R^1$ représente un radical hydrocarboné monovalent à terminaison insaturée, ayant de 2 à 14 atomes de carbone par radical, et
X peut être identique ou différent et est un atome d'halogène ou un radical de formule $-OR^2$,
dans laquelle $R^2$ représente un radical alkyle ayant de 1 à 8 atomes de carbone par radical, qui peut être substitué par un atome d'oxygène d'éther,
a vaut 0 ou 1,

avec des composés organosiliciés (2) ayant au moins deux atomes d'hydrogène liés à Si par molécule,
en présence de catalyseurs (3) favorisant l'addition d'hydrogène lié à Si sur une liaison multiple aliphatique,
et on élimine les silanes (1) en excès par distillation, le rapport employé entre liaison double aliphatique dans le silane (1) et hydrogène lié à Si dans le composé organosilicié (2) étant de 1,0 à 2,0,
dans une deuxième étape,
on fait réagir les composés renfermant des groupes hydrolysables ainsi obtenus
avec des silanes (4) de formule générale

$$H_bR_{3-b}SiZ$$

ou des siloxanes (5) de formule générale

$$H_bR_{3-b}SiOSiR_{3-b}H_b$$

dans lesquelles

R a la signification indiquée ci-dessus à cet effet,
Z représente un atome d'halogène ou un radical de formule $-OR^3$,
dans laquelle $R^3$ représente un radical hydrocarboné monovalent ayant de 1 à 8 atomes de carbone par radical, qui peut être substitué par un atome d'oxygène d'éther,
b vaut 1 ou 2,

et de l'eau, en présence de catalyseurs (6) favorisant l'hydrolyse,
le rapport employé entre les atomes de Si dans les silanes (4) ou les siloxanes (5) et les groupes hydrolysables X dans les composés obtenus à partir de la première étape étant de 0,8 à 5,0,
et éventuellement dans une troisième étape,
on équilibre les composés organosiliciés renfermant des atomes d'hydrogène liés à Si ainsi obtenus avec des organopolysiloxanes (7) renfermant éventuellement des atomes d'hydrogène liés à Si, choisis parmi le groupe constitué d'organopolysiloxanes linéaires renfermant des groupes triorganosiloxy terminaux, d'organopolysiloxanes linéaires renfermant des groupes hydroxy terminaux, d'organopolysiloxanes ramifiés renfermant éventuellement des groupes hydroxy, d'organopolysiloxanes cycliques et de copolymères à base de motifs diorganosiloxanes et mono-organosiloxanes,
à condition que les composés organosiliciés renfermant des atomes d'hydrogène liés à Si ainsi obtenus renferment en moyenne au moins 4 atomes d'hydrogène liés à Si par molécule.

2. Procédé selon la revendication 1, caractérisé en ce que l'on utilise le vinyltrichlorosilane en tant que silane (1).

3. Procédé selon la revendication 1 ou 2, caractérisé en ce que l'on utilise, en tant que composé organosilicié (2), des siloxanes de formule générale

$$HR_2SiO(HRSiO)_nSiR_2H$$

dans laquelle

R a la signification indiquée à cet effet à la revendication 1 et n représente un entier valant de 1 à 10.

**4.** Procédé selon la revendication 1, 2 ou 3, caractérisé en ce que l'on utilise le 1,1,3,3-tétraméthyldisiloxane en tant que siloxane (5).